# EUROPEAN PATENT APPLICATION

(11) **EP 4 497 501 A1**
(43) Date of publication of application: **29.01.2025**
(21) Application number: 23188430.5
(22) Date of filing: 28.07.2023
(51) Int. Cl.: B01J 23/36, B01J 21/06, B01J 23/656, B01J 23/68, B01J 23/889, B01J 37/02, B01J 37/08, B01J 37/18, B01J 37/34

(54) **RHENIUM-BASED HYDROGENATION CATALYST AND ITS USE AND PREPARATION**

(71) Applicant: TOYOTA JIDOSHA KABUSHIKI KAISHA, Toyota-shi, Aichi-ken, 471 8571 (JP)
(72) Inventor: NGUYEN, Phuc Hai, 1140 BRUSSELS (BE); MOCKENHAUPT, Benjamin, 2600 AA DELFT (NL); URAKAWA, Atsushi, 2600 AA DELFT (NL); PHONGPRUEKSATHAT, Nat, 2600 AA DELFT (NL)
(74) Representative: Cabinet Beau de Loménie

(57) **Abstract**

A method for manufacturing a catalyst for synthesizing methanol from carbon dioxide and hydrogen via a catalysis, with catalytic sites provided on a titania support from at least a dissolved metal precursor compound including a compound of rhenium (Re), comprises steps of
- impregnating a first dry powder or material of the support, using the dissolved precursor compound of Re and using a pH between 2 and 4 to obtain a second solid material, and
- processing the second solid material into a second dry powder, and
- preferably impregnating a first solid material using a precursor being a compound of a transition metal other than Re, such as silver (Ag), in a suspension of the material of the support with a pH between 8 and 11.

## Description

### BACKGROUND OF THE INVENTION

### 1. Field of the Invention

The invention relates to a catalyst for synthesizing methanol from carbon dioxide and hydrogen, a use of and a manufacturing method for the catalyst as well as a flow reactor for synthesizing methanol from carbon dioxide and hydrogen comprising the catalyst.

### 2. Description of Related Art

The reduction of carbon dioxide using hydrogen is a key process in the production of carbon neutral fuels. The synthesis of methanol from carbon dioxide and hydrogen is such a process.

For a low temperature synthesis of methanol from carbon dioxide and hydrogen Ting et al., ACS Catalysis, Volume 9, Issue 4, Pages 3685 - 3693, 5 April 2019 shows a catalyst with catalytic sites of Re on a support made from TiO₂. Slow kinetics and significant catalyst loss is observed in the known low temperature synthesis even with these catalysts. The PhD thesis by N. Phongprueksathat from 2023 at the Delft University of Technology in the Netherlands (ISBN 978-94-9458-946-7) investigates a catalyst with catalytic sites of Re on a support made from TiO_{2,} for the synthesis of methanol from carbon dioxide and hydrogen.

Also for a low temperature synthesis of methanol from carbon dioxide and hydrogen Toyao et al., ACS Catalysis 2019, 9 (9), 8187-8196 (DOI: 10.1021/acscatal.9b01225) shows a catalyst which is based on Pt nanoparticles on a support made from MoO₃ and TiO₂ and a related manufacture with a sequential impregnation with a precursor compound of Mo and then a precursor compound of Pt.

With prior art catalysts at least some of the following problems or drawbacks are observed:
- a low CO₂ conversion and/or low methanol production rate
- a low efficiency of catalytic sites on a support,
- an unreliable methanol production rate,
- a need of an expensive metal element source in significant amounts to provide catalytic sites.

### SUMMARY OF THE INVENTION

It is an object of the invention to improve the synthesis of methanol from carbon dioxide and hydrogen. It is an object of the invention to allow an excellent catalyst performance in the synthesis of methanol from carbon dioxide and hydrogen. It is an object of the invention to address aforementioned problems or drawbacks of the prior art.

An aspect of the invention is a method for manufacturing a catalyst for synthesizing methanol from carbon dioxide and hydrogen via a catalysis, comprising a support and catalytic sites provided on the support for the catalysis and from at least a dissolved metal precursor compound including a compound of Re,
the method comprising steps of
- impregnating a first dry powder or a material of the support, using the dissolved precursor compound of Re and using a pH between 2 and 4 to obtain a second solid material, and
- processing the second solid material into a second dry powder.

Between 1 and 5 wt%, preferably between 2 and 4 wt% Re per total weight of the support may be deposited onto the support.

The impregnating the material of the support to obtain a second solid material
a) may proceed with a dissolved precursor of Au (a transition metal other than Re) or
b) the method may preferably comprise steps of
   - impregnating a material of the support to obtain a first solid material and using
      -- one or more of dissolved metal precursor compounds of a metal selected from transition metals other than Re, and
      -- a suspension of the material of the support with a pH between 8 and 11,
   - processing the first solid material into the first dry powder, and
   - the impregnating of the first dry powder to obtain the second solid material.

Thus an aspect of the invention is also a method for manufacturing a catalyst for synthesizing methanol from carbon dioxide and hydrogen via a catalysis, comprising a support and catalytic sites provided on the support for the catalysis and from at least a dissolved metal precursor compound including a compound of Re,
the method comprising steps of
- impregnating a material of the support to obtain a first solid material and using
   -- one or more of dissolved metal precursor compounds of a metal selected from transition metals other than Re, and
   -- a suspension of the material of the support with a pH between 8 and 11,
- processing the first solid material into the first dry powder, and
- impregnating the first dry powder using the dissolved precursor compound of Re and using a pH between 2 and 4 to obtain a second solid material, and
- processing the second solid material into a second dry powder.

As described above, a material which is present before a pH controlled Re deposition is a first solid material, a first dry powder or a material of the support and furthermore a material is obtained with or after a pH controlled Re deposition (a second solid material, a second dry powder).

The transition metals other than Re comprise preferably at least one of Ag, Cu, Pd, Pt, and Cd. They may exert a promotor function in the catalysis. Among them Ag is a particular preference, which, in order to further enhance a catalyst performance, in particular in terms of speed of a reaction catalyzed with the catalyst, can be more preferably combined with Pt and/or Pd. The transition metals or transition metals other than Re improve catalytic activity and allow efficient catalysis with low amounts of expensive material for transition metals including Re.

The support may be any known support for a catalyst for synthesizing methanol from carbon dioxide and hydrogen via a catalysis, e.g. an inorganic oxide based support. Support examples are alumina, titanium dioxide and perovskites. Titanium dioxide is a preference. With regard to the crystal structure of titanium dioxide anatase is a preference. The support may be provided in a suspension, and the suspension may be preferably sonicated, which suppresses agglomeration of particles of the material of the support. It is preferable to provide the material of the support as an aqueous dispersion using ultrasonication and stirring.

At least one of the above mentioned processing into a first and second dry powder may include drying and/or calcining. Conventional techniques may be used for these operations.

As described the method for manufacturing of the invention involves an impregnation at pH between 2 and 4. In case that the precursor compound of Au is used together with the precursor compound of Re a pH of 2 is preferred. HNO₃ and/or HCl may be used to adjust the pH between 2 and 4. A precursor compound of Re may be prepared in a solution of a pH between 3 and 4. A precursor compound of Au may be prepared in a solution of a pH between 1 and 2, e.g. 1.14 and then mixed with the precursor compound of Re in a solution. A pH between 2 and 4 is used in impregnating a material of the support with the solution containing the precursor compound of Re or with the mixed solutions. In particular the pH between 2 and 4 is a pH of a slurry present in the step of impregnating to obtain a second solid material.

As described the method for manufacturing of the invention allows an impregnation at a pH between 8 and 12 to add another transition metal than Re. Here metal specific preferences specifically possibly values within the range between 8 and 12 are as follows:

| Metal | pH range | pH value(s) |
|---|---|---|
| Ag | 9 - 12 | 9.36, 11.96 |
| Cu | 8.5 - 10 | 9.36 |
| Cd | 8.5 - 10 | 9.36 |
| Pt | 8.5 - 10 | 9.36 |
| Pd | 8.5 - 10 | 9.36 |

NH₄OH may be used to adjust the pH between 8 and 12.

A catalyst is obtainable from the method according to the invention and is an aspect of the invention.

An aspect of the invention is a catalyst for synthesizing methanol from carbon dioxide and hydrogen via a catalysis, comprising
a support,
a set of at least one catalytic site provided on the support for the catalysis and from a set of at least one dissolved metal precursor compound, including a compound of Re and optionally at least one compound selected from compounds of transition metals other than Re, wherein
among catalytic sites of Re provided on the support, catalytic sites attributable to non-clustered Re atoms are prevailing in accordance with a frequency ratio between catalytic sites attributable to non-clustered Re atoms and catalytic sites attributable to clustered Re atoms of more than 1. In view of the principle of rounding off this means equal to 1.5 or more. Further preferred ranges for the ratio are 2.0 or 3.0. An amount of Re related to the weight of the support is preferably between 0.01 and 5 wt%, more preferably between 0.05 and 3.5 wt%. When catalytic sites of Re and of a transition metal other than Re like Ag are present on the support an amount of Re related to the weight of the support may be within the aforementioned ranges or may be preferably between 0.01 and 3 wt%, particularly preferably between 0.05 and 0.5 wt%, most preferably between 0.05 and 0.25 wt%.

Further aspects of the invention are
- a flow reactor for synthesizing methanol from carbon dioxide and hydrogen comprising one or more catalysts according to the invention, and
- a use of one or more catalysts according to the invention in a flow reactor to catalyze a reaction for synthesizing methanol from carbon dioxide and hydrogen at a temperature between 100 and 200°C and a pressure between 15 and 30 MPa.
In particular known reactors may be equipped with a catalyst according to the invention to catalyze a reaction for synthesizing methanol from carbon dioxide and hydrogen in the reactor at suitable reaction conditions.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically illustrates aspects of a manufacturing method for a catalyst according to the invention; and
FIG. 2, 3 and 4 show a performance of catalysts according to the invention.
Fig. 5A shows data from a high resolution TEM measurement of sizes of catalytic sites according to the prior art.
Fig. 5B shows data from a high resolution TEM measurement of sizes of catalytic sites according to the invention.

### DETAILED DESCRIPTION AND EXAMPLES

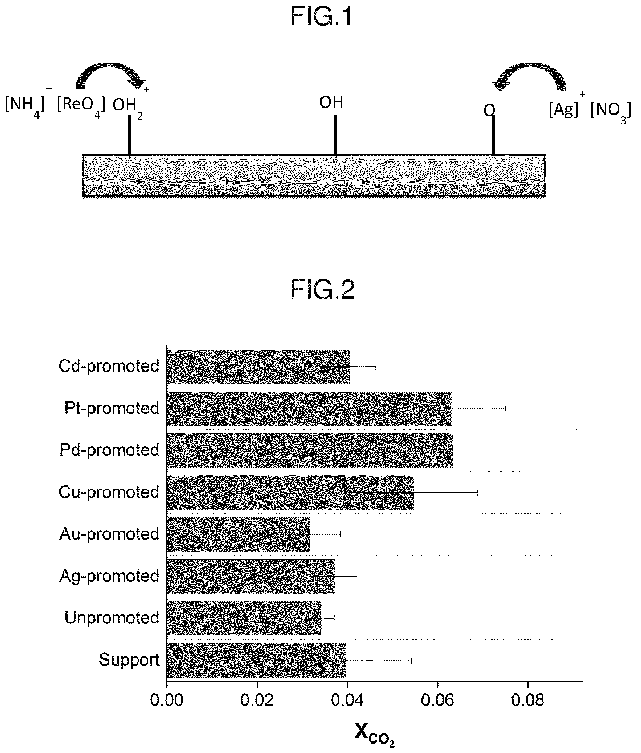

FIG. 1 schematically illustrates a metal oxide support for a catalyst with oxygen based groups which are exposed on the support in a suspension depending on a pH of the suspension. At a specific pH, which is 5.5 or about 5.5 when a material of the metal oxide support is TiO₂, an OH group is exposed on the support.

At a pH above the specific pH, e.g. between 8 and 12, in particular between 8 and 11 and more particularly between 9 and 11, an ionic O group is exposed on the support. In an impregnating operation this group is able to interact with the cation of a dissolved precursor compound of a transition metal other than Re for providing a catalytic site on the support. A prevailing lateral extension of such a catalytic site on the support is preferably less than 15 nm, more preferably less than 2 nm most preferably less than 1 nm in the invention. Ag⁺ as the cation and dissolved silver nitrate as the dissolved precursor compound is exemplified in Fig. 1.

At a pH below the specific pH, e.g. between 2 and 4, in particular between 3 and 4, an ionic OH₂⁺ group is exposed on the support. In an impregnating operation this group is able to interact with the anion of a dissolved precursor compound of Re for providing a catalytic site on the support. Perrhenate as the anion and dissolved ammonium perrhenate as the dissolved precursor compound is exemplified in Fig. 1.

As exemplified in Fig. 1 and explained above an aspect of the invention is the activation a support material by pH adjustment in a suspended state which alters dependent on the dissolved precursor compound used for impregnation and the catalytic site to be provided by the respective impregnation. Thus different impregnations are used for providing different catalytic sites, one of which is provided from a compound of Re, preferably a perrhenate salt. In other words and specifically for the case that a material of the support is TiO₂ a method according to the invention makes use of a preparation of Re/TiO₂ and Re-M/TiO₂ using modified impregnation procedures, wherein M is a transition metal other than Re, preferably selected from Ag, Au, Cu, Pd, Pt, Cd.

M is particularly preferably selected from Pt, Pd, and Cd for providing catalytic sites, in particular for excellently promoting the conversion of CO₂.

M is particularly preferably selected from Au, Cu, and Ag, more preferably from Au and Cu, for providing catalytic sites, in particular for excellently ensuring selectivity for a conversion of carbon dioxide and hydrogen into methanol.

M is particularly preferably selected from Pt and Ag, more preferably Ag, for providing catalytic sites, in particular for an excellent kinetic performance and turnover in synthesizing methanol from carbon dioxide and hydrogen.

In impregnations in the manufacturing method according to the invention various components may be used. For adjusting a pH in water there may be used one or more of
a) NH₄OH, in particular at 25 vol.-% (CAS: 1336-21-6),
b) HNO₃, in particular at 67 vol.-% (CAS: 7697-37-2), and
c) HCl, in particular at 37 vol.-% (CAS: 7647-01-0).

For providing catalytic sites on the support there may be used one or more of
d) Ag(NO₃) at 99,90% purity (CAS: 7761-88-8)
e) Au(O₂CCH₃)₃ (CAS: 15804-32-7)
f) Cu(NO₃)₂ (CAS: 10031-43-3)
g) Pd(NO₃)₂ (CAS: 207596-32-5)
h) H₁₂N₆O₆Pt (CAS: 20634-12-2)
i) Cd(NO₃)₂ (CAS: 10022-68-1), and
j) NH₄ReO₄ at 99% purity (CAS: 13598-65-7).

TiO₂ (CAS: 13463-67-7) may be used as the material of the support, in particular anatase. In the following examples anatase phase TiO₂ ST-01 supplied by Ishihara Sangyo, Japan was used as the material of the support.

### Example 1A

- A catalyst preparation was established
- for finally obtaining an Ag content of 5.4 µmol per g support and
- by providing a material of the support with the following step 2 and
- by adopting a sequence of steps, instructions and for materials obtained in each step as follows:

| Step | Instruction | material obtained |
|---|---|---|
| 1 | dissolve AgNO₃ in 5 ml deionized water | solution of Ag⁺_{(aq)} NO₃⁻_{(aq)}, transparent solution |
| 2 | disperse 5 g TiO₂ in 50 ml deionized water with a pH = 9.36 in a 100 ml round flask (10 Min Ultrasonication and afterwards stirring with a magnetic stirrer at 500-600 rpm) | intransparent suspension (white) |
| 3 | Add the solution from step 1 to dispersed support of step 2 and stir for 1 h at room temperature | intransparent suspension (white) |
| 4 | evaporate water using rotary evaporator 40-60 °C and p < 75 mbar | wet, white powder |
| 5 | Dry powder in oven at 100 °C over night (around 12-14 h) | dry white powder |
| 6 | Calcine grinded powder from step 5 at 350 °C, β=2 °C/min for 4 h in 1 L/min N₂ | white yellowish powder |

### Example 1B

The section "2. EXPERIMENTAL SECTION" of Ting et al., ACS Catalysis, Volume 9, Issue 4, Pages 3685 - 3693, 5 April 2019 shows a preparation of a catalyst with Re on a support. This catalyst preparation was modified by providing a material of the support with the material obtained from Example 1A above and the following steps, for finally obtaining an Re content of 0.1 wt% based on the weight of the material obtained from Example 1A. The sequence of steps, instructions and the materials obtained in each step in processing the material obtained from Example 1A was as follows:

| step | instruction | material obtained |
|---|---|---|
| 7 | re-disperse the grinded and promotor impregnated TiO₂ powder from step 6 in 50 ml deionized water with a pH = 3-4 in a 100 ml round flask (10 Min Ultrasonication and afterwards stirring with a magnetic stirrer at 500-600 rpm) | intransparent suspension (white-yellowish) |
| 8 | dissolve NH₄ReO₄ in 5 ml deionized water | solution of NH₄⁺_{(aq)} ReO₄⁻(_{aq}), transparent solution |
| 9 | add perrhenate solution to dispersed support of step 7 and stir for 1 h at room temperature | intransparent suspension (white-yellowish) |
| 10 | evaporate water using a rotary evaporator 40-60 °C and p < 75 mbar | wet, white-yellowish powder |
| 11 | dry powder in oven at 100 °C over night ( around 12-14 h) | dry white-yellowish powder |
| 12 | calcine grinded powder from step 11 at 350 °C, β=2 °C/min for 4 h in 1 L/min N₂ | white-yellowish powder |

In the following samples of the resulting catalyst and related experiments are labelled "Ag-promoted".

### Example 2

The sequence of steps and instructions according to Example 1A was modified for finally obtaining a Re content of 0.1 wt% based on the total weight of TiO₂ used throughout the sequence of steps and an Au content of 5.4 µmol per g TiO₂ used throughout the sequence of steps, as follows:

| step | instruction | material obtained |
|---|---|---|
| 1.1 | dissolving Au(O₂CCH₃)₃ in 5 ml deionized water | intransparent brownish suspension |
| 1.2 | add HCl until suspension changed to a yellow transparent solution with a pH = 1.14 | assumed to generate in solution HAuCl₄ |
| | | H⁺_{(aq)}AuCl₄⁻_{(aq)} |
| 2 | disperse 5 g TiO₂ in 50 ml deionized water with a pH = 3-4 in a 100 ml round flask (10 Min Ultrasonication and afterwards stirring with a magnetic stirrer at 500-600 rpm) | intransparent suspension (white) |
| 3 | add to the dispersion a) the Re precursor solution prepared according to step 8 of Example 1B and the Au solution from step 1.2 to work with a pH = 2-4 | intransparent suspension (white) |
| 4 | evaporate water using a rotary evaporator 40-60 °C and p < 75 mbar | wet, yellowish powder |
| 5 | dry powder in oven at 100 °C over night (around 12-14 h) | dry, yellowish powder |
| 6 | calcine grinded powder from step 5 at 350 °C, β=2 °C/min for 4 h in 1 L/min N₂ | white yellowish powder |

In the following samples of the resulting catalyst and related experiments are labelled "Au-promoted" .

### Further Examples for promoted catalysts

Examples 1A to 1B were repeated with replacing AgNO₃ in step 1 by a respective one of the above listed components f), g), h) and i) so as to replace Ag by another transition metal M, which respectively was Cu, Pd, Pt and Cd, and for finally obtaining a content of M which is 5.4 µmol per g support. In the following samples of the resulting catalysts and related experiments are labelled "Cu-promoted", "Pd-promoted", "Pt-promoted" or "Cd-promoted", according to the respective transition metal M used instead of Ag.

### Example for a non-promoted catalyst

Example 1B was modified by replacing step 7 by step i of Example 2. In the following samples and related experiments labelled "Unpromoted" are with this catalyst preparation having a Re content of 0.1 wt% based on the total weight of the support.

### Comparative Example

In the following samples and related experiments labelled "Support" are with the anatase phase TiO₂ ST-01 supplied by Ishihara Sangyo, Japan and subjected to dispersion and conversion into dry powder in accordance with steps i and 4 to 6 or Example 2.

### Flow reactor and Evaluation

A commercial micro reactor was loaded with a respective sample according to the above indicated sample labelling. The samples are subjected to a pretreatment (reduction) in the reactor under the following conditions: 400 °C, 0.5 h, 10 mL/min of 90% H₂/ 10% Ar. The operation of the reactor after the pretreatment was performed for 48 h to meet the following test conditions:
Temperature: 150 °C,
Pressure: 30 MPa,
Volume ratio the reaction gases in the gas space: H₂:CO₂ = 10
Weight Hourly Space Velocity: WHSV = 1.2 L/g*h.

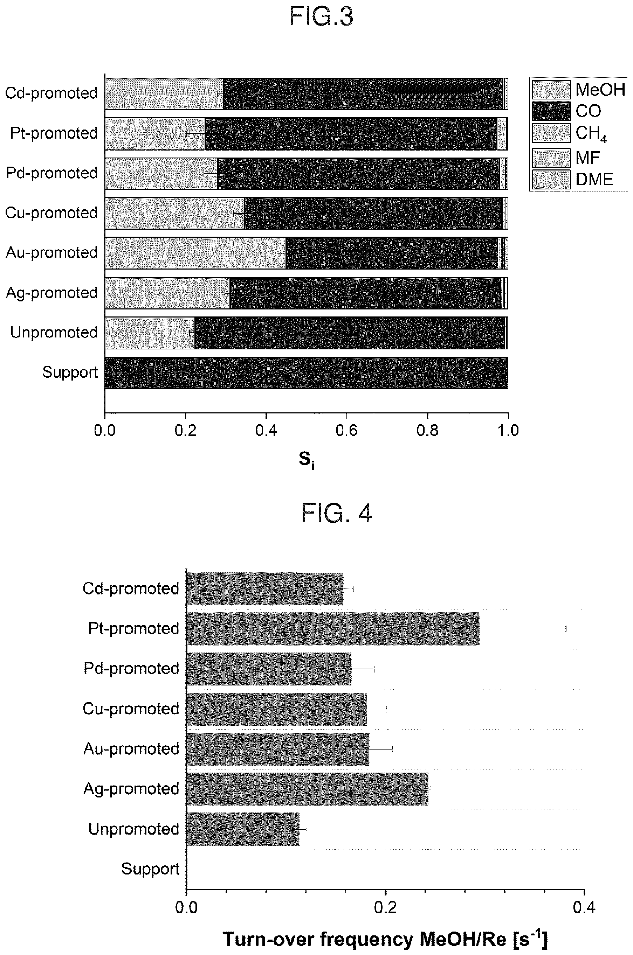

Reaction products leaving the micro reactor were analyzed as described in the PhD thesis by N. Phongprueksathat from 2023 at the Delft University of Technology in the Netherlands (ISBN 978-94-9458-946-7) from 30 h of to the end of 48 h of the operation of the micro reactor. The data were used to calculate values shown in Figs. 2 to 4. Values based on averaging the analysis over the time from 30 h of to the end of 48 h of the operation are indicated as bars in Figs. 2 to 4 and the fluctuations observed in the analysis over the time from 30 h of to the end of 48 h of the operation were used to calculate the error bars shown in Figs. 2 to 4. Percentages for selectivity and CO₂ conversion were obtained as in the PhD thesis by N. Phongprueksathat from 2023 at the Delft University of Technology in the Netherlands (ISBN 978-94-9458-946-7). CO₂ conversion values X_{CO2} shown in Fig. 2 and selectivity values Sᵢ shown in Fig. 3 are valued obtained by scaling percentages so that 0% corresponds to a value of 0 and 100% corresponds to a value of 1. Fig. 2 shows the values X_{CO2} for the samples indicated at the bars in the graph and mentioned above. Fig. 3 shows the values Sᵢ for the samples indicated at the bars in the graph and mentioned above, specifically selectivity values for carbon monoxide with dark bars, selectivity values for methanol with bars left of the dark bars, selectivity values for methane with bars right of the dark bars. In Fig. 3 the rightmost bar or section for the sample "Au-promoted" indicates a selectivity value for dimethyl ether (DME) and the rightmost bars or sections for the samples "Cd-promoted", "Pt-promoted", "Pd-promoted", "Cu-promoted" and "Ag-promoted" indicate a selectivity value for methyl formate (MF). Fig. 4 shows turnover frequencies (TOF values) obtained for samples indicated at the bars in the graph and mentioned above.

### Further comparative examples

In order to obtain 3 wt% Re per total weight of the support of TiO₂ in the finally prepared sample, a sample (sample A1) was prepared in line with the experimental section of Ting et al., ACS Catalysis, Volume 9, Issue 4, Pages 3685 - 3693, 5 April 2019.

A catalyst with 3 wt% Pt and 30 wt% Mo per total weight of the support of TiO₂ in the finally prepared sample is indicated as sample A2 hereafter and is shown in the experimental section of Toyao et al., ACS Catalysis 2019, 9 (9), 8187-8196 (DOI: 10.1021/acscatal.9b01225).

In order to obtain 1 wt% Re per total weight of the support of TiO₂ in the finally prepared sample, a sample (sample A3) was prepared in line with the experimental section of Ting et al., ACS Catalysis, Volume 9, Issue 4, Pages 3685 - 3693, 5 April 2019.

### Examples of catalysts having 1 wt% or 3 wt% Re per total weight of the support

The above Example for a non-promoted catalyst was modified for adjusting the amount of the precursor of Re once to obtain 3 wt% Re per total weight of the support in the finally prepared sample (sample B1) and once to obtain 1 wt% Re per total weight of the support in the finally prepared sample (sample B2).

The above Examples 1A to 1B were modified for adjusting the amounts of the precursor of Ag and Re to obtain 1 wt% Re and 0.59 wt% Ag per total weight of the support in the finally prepared sample (sample B3).

### Further Evaluations

The procedure from the above section Flow reactor and Evaluation was repeated with above mentioned sample A1 and sample B1 and selectivity percentages as follows were obtained:

| | Selectivity (%) | | | |
|---|---|---|---|---|
| | for CO | for methanol | for methane | for methyl formate |
| sample A1 | 1.4 | 22.5 | 76.6 | -- |
| sample B1 | 17.5 | 78.8 | 3.2 | 0.6 |

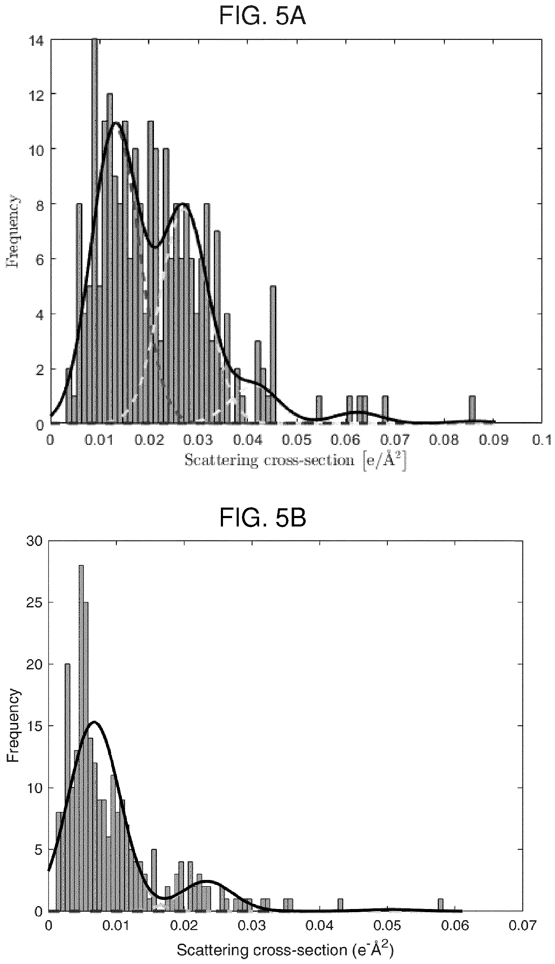

Fig. 5A shows a result of an evaluation of sample A1 with an electron scattering test.

Fig. 5B shows a result of an evaluation of sample B1 with the electron scattering test.

For the electron scattering test a software product, namely the multi-slice program MULTEM, was used to perform accurate and fast electron diffraction and imaging simulations using Graphics Processing Units with CUDA (a product of Nvidia). Details are available in Ultramicroscopy, Volume 156, 2015 (https://doi.org/]0.1016/j.ultramic.2015.04.016). The sensitivity of the detector was considered in the simulation and the simulated scattering cross-section of single Re atom sites on the evaluated material was 0.0112 Å**²** - 0.0121 Å**²** in case of sample B1 and 0.0114 Å**²** - 0.0123 Å**²** in case of sample A1. The curves over the frequency bars in Fig. 5A and 5B show a dominant peak attributable to single Re atom sites (major Re site fraction) and a further peak attributable to sites of clustered pairs of Re atoms (minor Re site fraction) in Fig. 5B compared to a number peaks attributable to sites of clusters with Re atoms in Fig. 5A. Accordingly the invention allows producing of and shows products with prevailing sites of Re atoms having a lateral extension < 1 nm on a catalyst support.

The procedure from the above section Flow reactor and Evaluation was repeated with above mentioned samples A3, B2, and B3 and the data obtained were used to calculate a percentage of conversion of educts into methanol and - with a calculation used in Ting et al., ACS Catalysis, Volume 9, Issue 4, Pages 3685 - 3693, 5 April 2019 - to obtain a hydrogenation per Re amount and time, i.e. a methanol production rate with the unit [mmol/mmol_{Re}/h]. Obtained values and described catalyst features are as follows:

| | conversion | methanol production rate |
|---|---|---|
| sample A2 (3 wt% Pt, 30wt% Mo, prior art) | - | - |
| sample A3 (1 wt% Re, prior art) | 2.2 % | 1.8 mmol/mmol_{Re}/h |
| sample B2 (1 wt% Re, invention) | 17.1 % | 7.09 mmol/mmol_{Re}/h |
| sample B3 (1 wt% Re, 0.59 wt% Ag, invention) | 33.1 % | 13.32 mmol/mmol_{Re}/h |

### Discussion

In view of the above it can be concluded that according to an aspect the invention profits from a new concept of depositing Re to provide catalytic sites on a catalysts support. In view of the above it can be concluded that according to an aspect the invention profits from combining catalytic sites on a support, one of which is based on Re and another one of which is based on M, a transition metal other than Re and in particular outstanding performance for specific representatives of M is apparent from Figs. 2 to 4. It is believed that the catalytic sites are then dedicated to different catalytic mechanisms or dedicated separately to CO₂ activation and H₂ activation in a gas-solid heterogeneous catalytic operation mode of a reactor with the invention's catalyst. In view of the above it can be concluded that according to an aspect the invention may profit from the provision of catalytic sites on a support with a dedicated pH control in impregnation operations for each of two combined catalytic sites on a support, one of which is based on Re and another one of which is based on M, a transition metal other than Re.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method for manufacturing a catalyst for synthesizing methanol from carbon dioxide and hydrogen via a catalysis, comprising a support and catalytic sites provided on the support for the catalysis and from at least a dissolved metal precursor compound including a compound of Re,
the method comprising steps of
- impregnating a first dry powder or a material of the support, using the dissolved precursor compound of Re and using a pH between 2 and 4 to obtain a second solid material, and
- processing the second solid material into a second dry powder.

2. The method according to claim 1, comprising steps of
- impregnating a material of the support to obtain a first solid material and using
-- one or more of dissolved metal precursor compounds of a metal selected from transition metals other than Re and
-- a suspension of the material of the support with a pH between 8 and 11,
- processing the first solid material into the first dry powder, and
- the impregnating of the first dry powder to obtain the second solid material.

3. The method according to claim 2, wherein the transition metals other than Re comprise at least one of Ag, Cu, Pd, Pt, and Cd.

4. The method according to claim 3, wherein the transition metals other than Re comprise Ag.

5. The method according to claim 4, wherein the transition metals other than Re comprise Pt and/or Pd.

6. The method according to claim 1, wherein the impregnating the material of the support to obtain a second solid material proceeds with a dissolved precursor of Au.

7. The method according to any one of claims 1 to 6, wherein the support comprises titanium dioxide.

8. The method according to any one of claims 1 to 7, wherein at least one of said processing into a first and second dry powder includes drying and/or calcining.

9. The method for manufacturing according to any one of claims 1 to 8, wherein NH₄OH is used to adjust the pH between 8 and 12.

10. The method for manufacturing according to any one of claims 1 to 9, wherein HNO₃ and/or HCl is used to adjust the pH between 2 and 4.

11. A catalyst obtained from the method of any one of claims 1 to 10.

12. A catalyst for synthesizing methanol from carbon dioxide and hydrogen via a catalysis, comprising
a support,
a set of at least one catalytic site provided on the support for the catalysis and from a set of at least one dissolved metal precursor compounds, including a compound of Re and optionally at least one compound selected from compounds of transition metals other than Re,
**characterized in that**
among catalytic sites of Re provided on the support, catalytic sites attributable to non-clustered Re atoms are prevailing in accordance with a frequency ratio between catalytic sites attributable to non-clustered Re atoms and catalytic sites attributable to clustered Re atoms of more than 1.

13. The catalyst according to claim 12 obtained from the method of any one of claims 1 to 10.

14. A flow reactor for synthesizing methanol from carbon dioxide and hydrogen comprising the catalyst according to any one of claims 11 to 13.

15. A use of the catalyst according to any one of claims 11 to 13 in a flow reactor to catalyze a reaction for synthesizing methanol from carbon dioxide and hydrogen at a temperature between 100 and 200°C and a pressure between 15 and 30 MPa.

## Amended claims

### Amended claims in accordance with Rule 137(2) EPC.

1. A method for manufacturing a catalyst for synthesizing methanol from carbon dioxide and hydrogen via a catalysis, comprising a support consisting of titanium dioxide and catalytic sites provided on the support for the catalysis and from at least a dissolved metal precursor compound including a compound of Re,
wherein curves over frequency bars obtained from the catalyst in the electron scattering test according to the description indicate prevailing catalytic sites attributable to non-clustered Re atoms with a frequency ratio between catalytic sites attributable to non-clustered Re atoms and catalytic sites attributable to clustered Re atoms of more than 1,
and the method comprises steps of
- impregnating a first dry powder or a material of the support, using the dissolved precursor compound of Re and using a pH between 2 and 4 to obtain a second solid material, and
- processing the second solid material into a second dry powder.

2. The method for manufacturing according to claim 1, wherein HNO₃ and/or HCl is used to adjust the pH between 2 and 4.

3. The method according to claim 1 or 2, comprising steps of
- impregnating a material of the support to obtain a first solid material and using
-- one or more of dissolved metal precursor compounds of a metal selected from transition metals other than Re and
-- a suspension of the material of the support with a pH between 8 and 12,
- processing the first solid material into the first dry powder, and
- the impregnating of the first dry powder to obtain the second solid material.

4. The method for manufacturing according to claim 3, wherein NH₄OH is used to adjust the pH between 8 and 12 of the suspension of the material of the support.

5. The method according to claim 3 or 4, wherein the transition metals other than Re comprise at least one of Ag, Cu, Pd, Pt, and Cd.

6. The method according to claim 5, wherein the transition metals other than Re comprise Ag.

7. The method according to claim 5, wherein the transition metals other than Re comprise at least one of Pd, Pt and Cd.

8. The method according to claim 7, wherein the transition metals other than Re comprise Pt and/or Pd.

9. The method according to claim 1 or 2, wherein the impregnating the material of the support to obtain a second solid material proceeds with a dissolved precursor of Au.

10. The method according to any one of claims 1 to 9, wherein at least one of said processing into a first and second dry powder includes drying and/or calcining.

11. A catalyst obtained from the method of any one of claims 1 to 10.

12. A flow reactor for synthesizing methanol from carbon dioxide and hydrogen comprising the catalyst according to claim 11.

13. A use of the catalyst according to claim 11 in a flow reactor to catalyze a reaction for synthesizing methanol from carbon dioxide and hydrogen at a temperature between 100 and 200°C and a pressure between 15 and 30 MPa.
